# EUROPEAN PATENT SPECIFICATION

(11) **EP 2 174 765 B1**
(45) Date of publication and mention of the grant of the patent: **10.12.2014**
(21) Application number: 08173015.2
(22) Date of filing: 29.12.2008
(51) Int. Cl.: B29C 45/14

(54) **Method of in-mold decoration**
Verfahren zum Folienhinterspritzen
Procédé de décoration dans le moule

(30) Priority: 07.10.2008 TW 97138531
(43) Date of publication of application: 14.04.2010
(73) Proprietor: TAIYI Precision Tech Corp., Taipei County (TW)
(72) Inventor: Huang, Pao-Chuan, Taipei County (TW)
(74) Representative: Viering, Jentschura & Partner Patent- und Rechtsanwälte

(56) References cited:
- JP-A- 10 180 795
- JP-A- 55 039 338
- JP-A- 62 263 013
- JP-A- 2004 017 508
- JP-A- 2006 044 195
- US-A- 5 993 588
- US-A1- 2001 026 851
- US-A1- 2004 229 042
- US-A1- 2007 110 905
- US-A1- 2007 160 831
- US-B1- 6 548 000

## Description

### FIELD OF THE INVENTION

The present invention relates to a method of in-mold decoration, and more particularly to a method of forming an injection-molded plastic layer and a printed pattern on both sides of the thin-film substrate respectively.

### BACKGROUND OF THE INVENTION

With the progress and improvement of technology, the new generation of electronic products not only have better execution performance and more friendly user interface but also have improved designs so as to emphasize their unique characteristics and styles for thereby changing the former impression on these electronic products and raising the marketing percent via their diverse characteristics and charms on designs.

Under such a tendency, the in-mold decoration (IMD) has been become a popularly employed technology in the field of surface decoration. In the in-mold decoration procedure, a shapeable film is employed to replace the conventional manufacture processes including painting, printing, heat pressing, and chromium plating steps which are performed after the components are shaped. Therefore, the surface effects and patterns of the products can be increased and the required steps for manufacturing the products can be also decreased. Accordingly, the taken manufacture time and the production cost can be significantly reduced. Therefore, the method of in-mold decoration is widely applied to the mobile phones, the laptop computers, the home appliances such as washing machines, and even the dashboard and case decoration of cars.

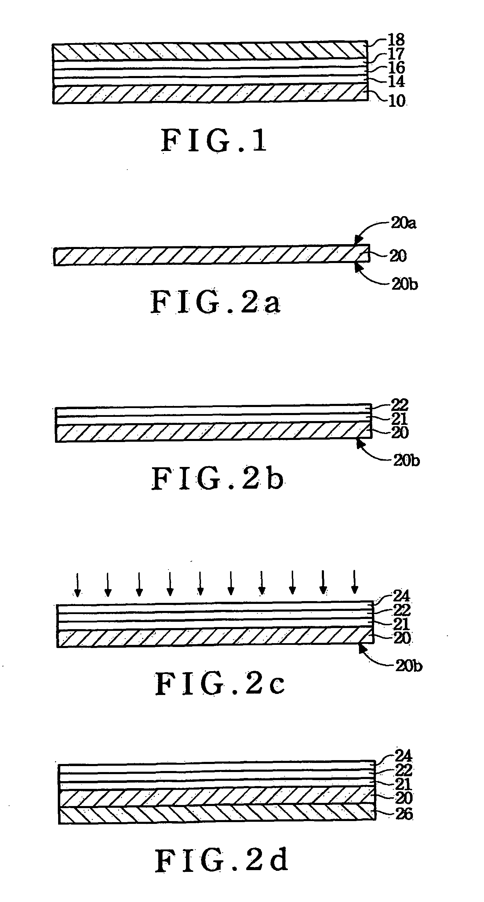

Referring to FIG. 1, this figure shows a process for manufacturing a product in accordance with the conventional method of in-mold decoration. First, the ink is printed on the surface of the thin-film substrate 10 so as to form the required pattern 14. Then, an anti-ink spreading layer 16 and an adhesive layer 17 are printed on the surface of the pattern 14. Finally, an injection molding treatment is performed on the surface of the adhesive layer 17 so as to form a plastic layer 18 on the surface of the adhesive layer 17.

It is worthy to note that the taken manufacture time and cost are increased significantly since the step of printing the anti-ink spreading layer 16 are repeated several times to thereby prevent the injection molded plastic layer 18 from damaging the pattern 14 on the thin-film substrate 10.

Besides, if it is desired to manufacture a 3D-shaped product by using the in-mold decoration method, a heat-pressing procedure must be utilized to shape the thin-film substrate via the heat-pressing mold before the performing of the injection molding procedure. However, if the surface of the utilized thin-film substrate has been hardened by hardening treatment, the crack phenomenon will occurs easily on the surface of the thin-film substrate during the heat-pressing procedure, resulting in that the height and the R angle of the 3D-shaped products are confined so it is unable to fulfill the requirements of industrial designers. A method of in-mold decoration is for example known from US-A-2004/00229042 and JP-A-62263013.

### SUMMARY OF THE INVENTION

The present invention provides a method of in-mold decoration, which comprises the following steps of providing a thin-film substrate having a first surface and a second surface opposed to the first surface, printing a pattern on the first surface of the thin-film substrate, forming a protection film on the surface of the pattern, coating a hard-coating layer on the pattern, shaping the thin-film substrate by a heat-pressing procedure, irradiating the hard-coating layer for hardening the hard-coating layer after shaping the thin-film substrate, cutting the thin-film substrate, and performing an injection molding procedure on the thin-film substrate to form a plastic layer on the second surface of the thin-film substrate.

In one preferred embodiment, a hot-air drying treatment is further performed on the hard-coating layer coated on the first surface before the performing of the heat-pressing procedure so as to initially dry the hard-coating layer.

### BRIEF DESCRIPTION OF THE DRAWINGS

FIG. 1 shows a process for manufacturing a product in accordance with the conventional method of in-mold decoration;
FIGS. 2a-2d show a process of manufacturing a planar product in accordance with the method of in-mold decoration which is not part of the present invention;
FIGS. 3a-3d show a process of manufacturing a 3D-shaped product in accordance with the method of in-mold decoration of the present invention;
FIG. 4 shows a detailed process of the method of in-mold decoration of the present invention.

### DESCRIPTION OF THE PREFERRED EMBODIMENT

Referring to FIGS. 2a-2d, these figures show a process of the method of in-mold decoration which is not part of the present invention. First, as shown in FIG. 2a, a thin-film substrate 20 is provided. This thin-film substrate 20 has a first surface 20a and a second surface 20b opposed to the first surface 20a. It is preferred that this thin-film substrate 20 is a transparent thin film and is stored by a roll-to-roll method.

Thereafter, as shown in FIG. 2b, a roll-type printing machine is utilized to form a pattern 22 on the first surface 20a of the thin-film substrate 20 by printing ink thereon. In addition, the pattern 22 is printed on the first surface 20a of the thin-film substrate 20 by the roll-to-roll method. In other words, after the pattern 22 is printed, the thin-film substrate 20 is stored still by the roll-to-roll method.

It is preferred, in order to prevent the pattern 22 from being damaged due to the occurrence of ink spreading phenomenon in the sequent injection molding procedure, an anti-ink spreading layer 21 is optionally printed on the first surface 20a of the thin-film substrate 20 before performing the step of forming the pattern 22 on the first surface 20a of the thin-film substrate 20. And, after the anti-ink spreading layer 21 is formed, the pattern 22 is then printed on the upper surface of the anti-ink spreading layer 21. The above-described anti-ink spreading layer 21 is also formed by the roll-to-roll method.

Besides, after the pattern 22 is printed on the thin-film substrate 20, a protection film is optionally adhered to the first surface 20a of the thin-film substrate 20 for covering the pattern 22 so as to protect the pattern 22 printed on the thin-film substrate 20 against scratch or pollution since the thin-film substrate 20 that has the pattern 22 printed thereon is stored by the roll-to-roll method. After the pattern 22 is covered with the protection film, the thin-film substrate 20 is then stored by the roll-to-roll method, wherein the protection film is adhered thereto by using a back-gluing machine.

Thereafter, as shown in FIG. 2c, a hard-coating layer 24 is coated on the surface of the pattern 22 and then the UV light is utilized to irradiate and harden the hard-coating layer 24, wherein the procedure of coating the hard-coating layer 24 on the pattern 22 is performed by using an auto coating machine, and then a hot-air drying treatment is performed so as to initially dry the hard-coating layer 24. Thereafter, the UV light is utilized to harden the hard-coating layer 24.

Certainly, if the step of adhering the protection film to the thin-film substrate 20 is performed immediately after the step of printing the pattern 22, the protection film must be stripped off first before the step of coating the hard-coating layer 24 on the pattern 22. In addition, in order to protect the hard-coating layer 24 against pollution, another protection film can be further optionally adhered to the first surface 20a of the thin-film substrate 20.

Thereafter, as shown in FIG. 2d, a cutting procedure is performed on the thin-film substrate 20, wherein a steel cutting machine is utilized for cutting along the outline of the thin-film substrate 20 so as to obtain the required portion of the thin-film substrate 20. Afterward, an injection molding procedure is performed on the thin-film substrate 20 by using an injection molding machine for forming a plastic layer 26 on the second surface 20b of the thin-film substrate 20. Because the injection-molded plastic layer 26 is formed on the second surface 20b of the thin-film surface 20, the pattern 22 printed on the first surface 20a is thus prevented from the occurrence of ink spreading phenomenon.

It is specially noted that there is a need to manufacture a 3D-shaped product by applying the method of in-mold decoration (IMD) of the present invention, a heat-pressing procedure is additionally performed between the step of coating the hard-coating layer 24 and the step of irradiating the hard-coating layer 24 with the UV light so as to provide the thin-film substrate 20 with a 3D shape.

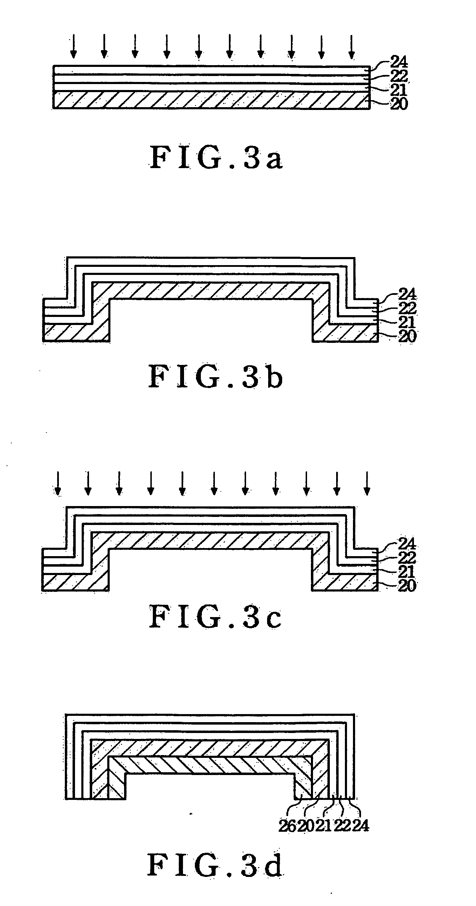

Referring to FIGS. 3a-3d, these figures show a process of manufacturing a 3D-shaped product in accordance with the method of in-mold decoration of the present invention. As shown in FIG. 3a, after the optionally formed anti-ink spreading layer 21, the pattern 22, and the hard-coating layer 24 are formed on the first surface 20a of the thin-film substrate 20 in sequence, a hot-air drying treatment can be performed before the heat-pressing procedure so as to initially dry the hard-coating layer 24.

After the hot-air drying treatment, the initially dried hard-coating layer 24 helps the sequent shaping of the thin-film substrate 20. Thereafter, as shown in FIG. 3b, a heat-pressing machine and a heat-pressing mold are utilized so as to heat press the first surface 20a of the thin-film substrate 20 for thereby providing the thin-film substrate 20 with the required 3D shape.

After the heat-pressing procedure is completed, as shown in FIG. 3c, an irradiating procedure is performed on the hard-coating layer 24 so as to completely harden the hard-coating layer with the UV light. In one preferred embodiment, the UV light with an energy range from 500 to 800 joules is utilized for irradiating the hard-coating layer 24. After the irradiating step is completed, the hardness of the hard-coating layer 24 can achieve a value range from 500 to 765 g/H.

After the above-described coating and irradiating procedures are completed, as shown in FIG. 3d, a cutting procedure is performed on the thin-film substrate 20 so as to obtain the required shape, and then an injection molding procedure is performed on the thin-film substrate 20 for forming a plastic layer 26 on the second surface 20b of the thin-film substrate 20.

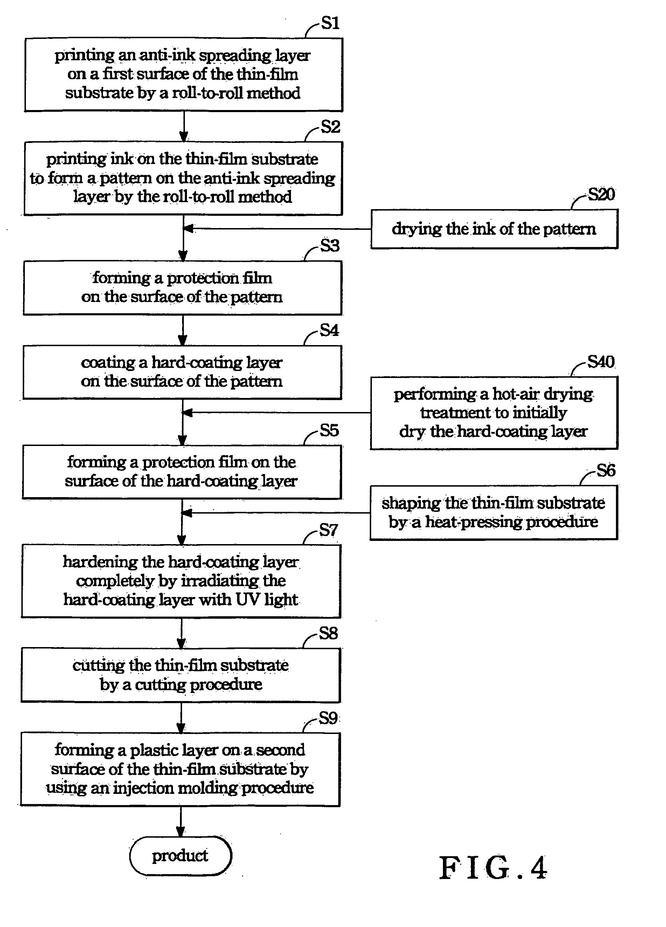

Referring to FIG. 4, which shows a detailed process of the method of in-mold decoration of the present invention. First, a step S1 is performed for printing an anti-ink spreading layer 21 on a first surface 20a of the thin-film substrate 20 by a roll-to-roll method. Generally speaking, after the anti-ink spreading layer 21 is printed, a baking step S20 can be performed on the thin-film substrate 20 with a temperature range between 65 and 90 degrees centigrade for about 5 to 15 minutes so as to dry the anti-ink spreading layer 21. As described above, the step S1 is omittable if the following injection molding procedure does not bring about the occurrence of ink spreading phenomenon.

Thereafter, a step S2 is performed for printing ink on the thin-film substrate 20 so as to form a pattern 22 on the surface of the anti-ink spreading layer 21 by the roll-to-roll method. Similarly, after the pattern 22 is printed thereon, the step S20 can be performed on the thin-film substrate 20 with a temperature range between 65 and 90 degrees centigrade for about 5 to 15 minutes so as to dry the ink of the pattern 22.

Thereafter, a step S3 is performed for forming a protection film on the surface of the pattern 22. Certainly, as described above, this step S3 is optionally omittable. Thereafter, a step S4 is performed for coating a hard-coating layer 24 on the surface of the pattern 22. After the coating procedure of the hard-coating layer 24 is completed, a step S40 is performed for performing a hot-air drying treatment so as to initially dry the hard-coating layer 24. Then, a step S5 is optionally performed for forming a protection film on the surface of the hard-coating layer 24 on demand.

If it is desired to manufacture a 3D-shaped product, a step S6 is additionally performed for shaping the thin-film substrate 20 by a heat-pressing procedure. Thereafter, a step S7 is performed for completely hardening the hard-coating layer 24 by irradiating the hard-coating layer 24 with the UV light.

Thereafter, a step S8 is performed for cutting the thin-film substrate 20 by a cutting procedure. And, a step S9 is performed for forming a plastic layer 26 on a second surface 20b of the thin-film substrate 20 by using an injection molding procedure, and thereby obtaining the final product.

The method of in-mold decoration of the present invention has considerable advantages. First, the injection-molded plastic layer and the printed pattern are located on both sides of the thin-film substrate respectively so the injection-molded plastic layer does not touch the ink directly and thus the occurrence of ink spreading phenomenon can be reduced effectively. As a result, the required number of times for printing the anti-ink spreading layer can be significantly reduced, thereby decreasing the cost effectively and increasing the competitiveness of the injection molded products.

Moreover, the hard-coating layer can be initially dried by the hot-air drying procedure before the step of shaping of the thin-film substrate by the heat-pressing procedure. Then, the UV light is utilized for completely hardening the hard-coating layer so as to meet the physical property requirement for surface. In this way, the shaped thin-film substrate can maintain its 3D shape and thereby avoid the occurrence of deformation caused by insufficient surface hardness. Moreover, in the heat-pressing procedure, the thin-film substrate has comparatively less ability to adhere to the heat-pressing mold so the production performance of the heat-pressing procedure can be thus increased.

Furthermore, the thin-film substrate still has considerable expansibility after the initial drying of the hard-coating layer so the thin-film substrate can be shaped into the required 3D shape via the heat-pressing mold and then hardened by the UV light irradiation. As a result, the surface of the thin-film substrate is prevented from the occurrence of cracks caused by excessive surface hardness during the heat-pressing procedure.

While the preferred embodiment of the invention has been set forth for the purpose of disclosure, modifications of the disclosed embodiment of the invention as well as other embodiments thereof may occur to those skilled in the art. Accordingly, the appended claims are intended to cover all embodiments of the invention.

## Claims

1. A method of in-mold decoration, comprising:
providing a thin-film substrate (20) having a first surface (20a) and a second surface (20b) opposed to the first surface (20a);
printing a pattern (22) on the first surface (20a) of the thin-film substrate (20);
forming a protection film on the surface of the pattern (22);
coating a hard-coating layer (24) on the pattern (22);
shaping the thin-film substrate (20) by a heat-pressing procedure;
irradiating the hard-coating layer (24) for hardening the hard-coating layer (24) after shaping the thin-film substrate (20);
performing a cutting procedure on the thin-film substrate (20); and
performing an injection molding procedure on the thin-film substrate (20) for forming a plastic layer (26) on the second surface (20b) of the thin-film substrate (20).

2. The method of in-mold decoration of claim 1, wherein before the step of performing the heat-pressing procedure, further comprises performing a hot-air drying procedure so as to dry the hard-coating layer (24) initially.

3. The method of in-mold decoration of claim 1, wherein a UV light with an energy range from 500 to 800 joules is utilized in the step of irradiating the hard-coating layer (24) to irradiate the hard-coating layer (24).

4. The method of in-mold decoration of claim 1, wherein before the step of printing the pattern (22) on the first surface (20a) of the thin-film substrate (20), further comprises coating an anti-ink spreading layer (21) on the first surface (20a) of the thin-film substrate (20).

5. The method of in-mold decoration of claim 1, wherein the step of printing the pattern (22) on the first surface (20a) of the thin-film substrate (20) is performed by a roll-to-roll method.

6. The method of in-mold decoration of claim 1, wherein before the step of coating the hard-coating layer (24) on the pattern (22), further comprises stripping off the protection film.

7. The method of in-mold decoration of claim 1, wherein after the step of coating the hard-coating layer (24), further comprises adhering a protection film on the first surface (20a) of the thin-film substrate (20) to protect the hard-coating layer (24) against pollution.

## Patentansprüche

1. Ein Verfahren für eine Innengussformdekoration (In-Mold Decoration), umfassend
Vorsehen eines dünnen Filmsubstrats (20) mit einer ersten Oberfläche (20a) und einer zweiten Oberfläche (20b), die der ersten Oberfläche (20a) gegenübersteht;
Drucken eines Musters (22) auf die erste Oberfläche (20a) des dünnen Filmsubstrats (20);
Bilden eines Schutzfilms auf der Oberfläche des Musters (22);
Beschichten einer Hartbeschichtungsschicht (24) auf dem Muster (22);
Formen des Dünnfilmsubstrats (20) durch ein Warmpressverfahren; Bestrahlen der Hartbeschichtungsschicht (24) zum Aushärten der Hartbeschichtungsschicht (24) nach Formung des Dünnfilmsubstrats (20);
Durchführen eines Schneideverfahrens auf dem Dünnfilmsubstrat (20); und
Durchführen eines Spritzgussverfahrens auf dem Dünnfilmsubstrat (20) zur Bildung einer Kunststoffschicht (26) auf der zweiten Oberfläche (20b) des Dünnfilmsubstrats (20).

2. Das Verfahren der Innengussformdekoration (In-Mold Decoration) nach Anspruch 1, wobei vor dem Schritt der Durchführung des Warmpressverfahrens weiterhin ein Heißlufttrocknungsverfahren durchgeführt wird, um die Hartbeschichtungsschicht (24) anfänglich zu trocknen.

3. Das Verfahren der Innengussformdekoration (In-Mold Decoration) nach Anspruch 1, wobei ein UV-Licht in einem Energiebereich von 500 bis 800 Joule verwendet wird in dem Schritt der Bestrahlung der Hartbeschichtungsschicht (24) zum Bestrahlen der Hartbeschichtungsschicht (24).

4. Das Verfahren der Innengussformdekoration (In-Mold Decoration) nach Anspruch 1, wobei des Weiteren vor dem Schritt der Bedruckung des Musters (22) auf der ersten Oberfläche (20a) des Dünnfilmsubstrats (20) eine Beschichtung mit einer Anti-Tintenverteilungsschicht (21) auf der ersten Oberfläche (20a) des Dünnfilmsubstrats (20) vorgesehen ist.

5. Das Verfahren der Innengussformdekoration (In-Mold Decoration) nach Anspruch 1, wobei der Schritt der Bedruckung des Musters (22) auf der ersten Oberfläche (20a) des Dünnfilmsubstrats (20) mit einem Rolle-zu-Rolle-Verfahren durchgeführt wird.

6. Das Verfahren der Innengussformdekoration (In-Mold Decoration) nach Anspruch 1, wobei des Weiteren vor dem Schritt der Beschichtung der Hartbeschichtungsschicht (24) auf dem Muster (22) das Entfernen des Schutzfilms vorgesehen ist.

7. Das Verfahren der Innengussformdekoration (In-Mold Decoration) nach Anspruch 1, wobei des Weiteren nach dem Schritt der Beschichtung der Hartbeschichtungsschicht (24) das Haften eines Schutzfilms auf der ersten Oberfläche (20a) des dünnen Filmsubstrats (20) vorgesehen ist, um die Hartbeschichtungsschicht (24) gegen Verschmutzung zu schützen.

## Revendications

1. Procédé de décoration dans le moule, comprenant :
la fourniture d'un substrat en couche mince (20) ayant une première surface (20a) et une seconde surface (20b) opposée à la première surface (20a) ;
l'impression d'un motif (22) sur la première surface (20a) du substrat en couche mince (20) ;
la formation d'un film de protection sur la surface du motif (22) ;
l'application d'une couche de revêtement dur (24) sur le motif (22) ;
le façonnage du substrat en couche mince (20) par une procédure de pressage à chaud ;
l'irradiation de la couche de revêtement dur (24) pour durcir la couche de revêtement dur (24) après façonnage du substrat en couche mince (20) ;
la réalisation d'une procédure de découpe sur le substrat en couche mince (20) ; et
la réalisation d'une procédure de moulage par injection sur le substrat en couche mince (20) pour former une couche de plastique (26) sur la seconde surface (20b) du substrat en couche mince (20).

2. Procédé de décoration dans le moule selon la revendication 1, comprenant en outre, avant l'étape de réalisation de la procédure de pressage à chaud, la réalisation d'une procédure de séchage à l'air chaud de sorte à sécher d'abord la couche de revêtement dur (24).

3. Procédé de décoration dans le moule selon la revendication 1, dans lequel une lumière UV ayant une gamme d'énergies de 500 à 800 joules est utilisée dans l'étape d'irradiation de la couche de revêtement dur (24) pour irradier la couche de revêtement dur (24).

4. Procédé de décoration dans le moule selon la revendication 1, comprenant en outre, avant l'étape d'impression du motif (22) sur la première surface (20a) du substrat en couche mince (20), l'application d'une couche contre l'étalement de l'encre (21) sur la première surface (20a) du substrat en couche mince (20).

5. Procédé de décoration dans le moule selon la revendication 1, dans lequel l'étape d'impression du motif (22) sur la première surface (20a) du substrat en couche mince (20) est réalisée par un procédé rouleau à rouleau.

6. Procédé de décoration dans le moule selon la revendication 1, comprenant en outre, avant l'étape d'application de la couche de revêtement dur (24) sur le motif (22), le retrait du film de protection.

7. Procédé de décoration dans le moule selon la revendication 1, comprenant en outre, après l'étape d'application de la couche de revêtement dur (24), le collage d'un film de protection sur la première surface (20a) du substrat en couche mince (20) pour protéger la couche de revêtement dur (24) contre la pollution.
